# EUROPEAN PATENT SPECIFICATION

(11) **EP 2 422 743 B1**
(45) Date of publication and mention of the grant of the patent: **14.08.2013**
(21) Application number: 10707559.0
(22) Date of filing: 22.01.2010
(51) Int. Cl.: A61C 15/04, B65D 51/24

(54) **SCREW CAP WITH DENTAL FLOSS DEPOSIT**
SCHRAUBKAPPE MIT ZAHNSEIDENDEPOT
BOUCHON VISSABLE AVEC RÉSERVE DE FIL DENTAIRE

(43) Date of publication of application: 29.02.2012
(73) Proprietor: Bosch Cerdá, Maria Antonia, 07015 Palma De Mallorca (ES); González Martín, Juan Antonio, 08211 Castellar Del Vallés (Barcelona) (ES)
(72) Inventor: Bosch Cerdá, Maria Antonia, 07015 Palma De Mallorca (ES); González Martín, Juan Antonio, 08211 Castellar Del Vallés (Barcelona) (ES)
(74) Representative: Monzón de la Flor, Luis Miguel
(86) International application number: PCT/ES2010/070038
(87) International publication number: WO 2011/089282

(56) References cited:
- DE-A1-102006 044 670
- DE-U1-202004 012 638
- ES-U- 1 069 884
- US-A1- 2006 196 909

## Description

### OBJECT OF THE INVENTION

The purpose of this invention is a screw cap with a dental floss deposit, that is, it refers to a cap which as well as serving to close a toothpaste tube or similar or a mouthwash bottle it is **characterised in that** it is simultaneously provided with a spool having a reel of dental floss.

This invention is characterised not only by the fact that it is provided with a joint arrangement of a tube or bottle and the dental floss, but also the floss is located in the cap which serves to close the tube or bottle.

Additionally, and in a complementary manner, the screw cap which is the object of the invention is provided with means for arrangement of interdental brushes.

Therefore, this invention is circumscribed within the scope of containers for dental care products, and within the scope of caps used for closing caps and bottles as well as storage accessories and supply of dental floss.

### BACKGROUND TO THE INVENTION

To date, in general, tubes and bottles of dental care products such as toothpaste tubes or mouthwash bottles have been directly provided with their corresponding threaded caps. Should dental floss be required, it is directly provided with a dental floss container or dispenser.

At times it is convenient to have both elements at hand, particularly when travelling, so that it is not necessary to have both the dental care tube or bottle on one hand and the dental floss dispenser on the other.

In the state of the art it is known a cap which is provided with a reel of dental floss housed within the cap as the one disclosed in ES 1069884U

It is also known the patent US 2006196909 which discloses a dental floss dispenser for mounting on toothpaste tube closure, has cover that is provided to cover aperture and floss cutting blade, and which moves with lid.

Additionally in the state of the art it is also known the document DE 102006044670 which discloses a tube of toothpaste which has a flip cap that opens to reveal secondary screw-cap with one or more inter-dental tooth brushes.

Therefore, the object of this invention is to overcome the foregoing disadvantages by developing a toothpaste tube or mouthwash bottle which is provided with the necessary means for storing and supplying dental floss, as shown in claim one, and which permits all the characteristics claimed to be combined in a single product.

### DESCRIPTION OF THE INVENTION

The purpose of the invention of the screw cap with a dental floss deposit, basically consists of a cap which serves to close a tube of toothpaste or mouthwash bottle and which is provided in its interior with means required to house and dispense dental floss without the tube or bottle requiring any added or adjacent means.

Therefore the dental floss storage and dispensation means are situated on the cap, making use of the actual structure of the cap.

The cap is provided on its lower base with an aperture which is threaded in its interior and on which the threaded neck of the tube or bottle is threaded in order to close the recipient.

Given that caps in general have a cone trunk configuration in the internal space between its walls and the interior threaded zone, a spool is provided on which the dental floss is wound, with said dental floss being supplied through one side of the cap by means of a window of an inspection hatch of the cap which permits internal inspection of the housing of the dental floss reel.

The dental floss supply window is provided with means for cutting the floss, which permits the floss not only to be dispensed but also to be cut to the desired length.

In order to be able to inspect the interior of the cap, it is possible to access the interior through a lateral inspection hatch which is provided with a dispensing window and on which cutting means are arranged.

In addition, and in order to permit the removal or replacement of the dental floss reel, the upper part of the cap is articulated in respect to the lower part through an articulation point provided with engagement and retention means in the upper part of the cap in respect of the lower part based on the use of a tongue and groove.

According to the invention in the lower part of the cap, it is possible to house a series of interdental brushes, which are affixed by clips specially designed to affix said brushes.

The attachment clips of the interdental brushes remain affixed to the walls of the lower part of the cap, so that the interior space of the cap remains free to house the closing thread of the tube or mouthwash bottle.

The dimensions of the lower part of the cap and the interdental brushes shall be such that when the upper part of the cap is open it permits access to any of the interdental brushes.

Due to the means described it is possible to supply the dental floss housed in the interior of the cap, which may be supplied directly from the cap, either when it is threaded or not threaded, and furthermore permitting inspection of any problems, in addition to replacing a reel of dental floss with another.

### DESCRIPTION OF THE FIGURES

In order to complete the description below, and to assist in obtaining a better comprehension of its characteristics, the present descriptive report is accompanied by a set of plans with figures representing in an illustrative but not restrictive way the most significant details of the invention.

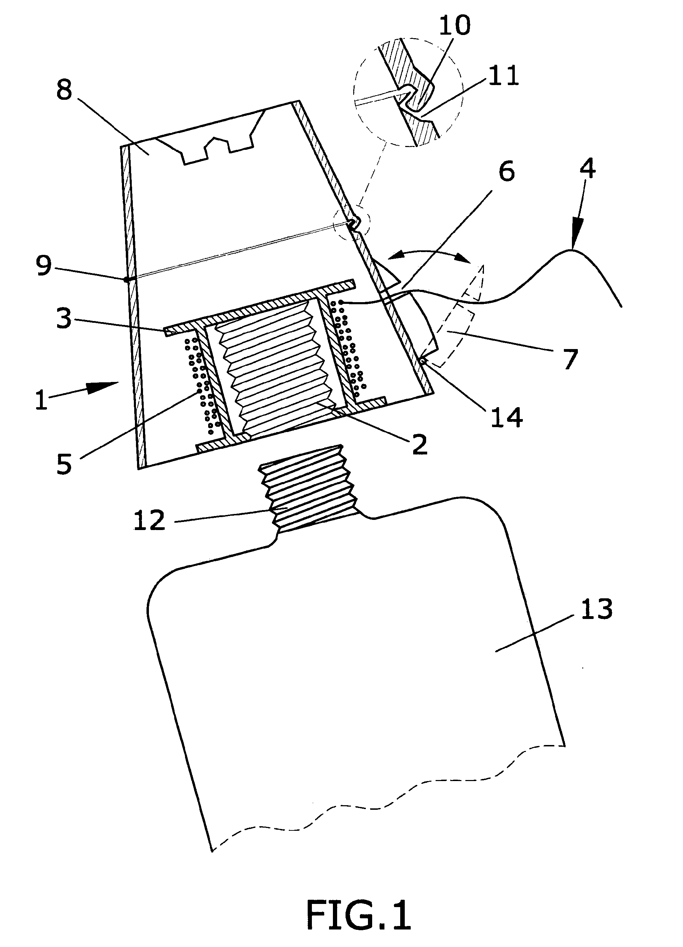

known the prior art Figure 1 shows a diagram of a screw cap such as and which is shown in vertical cross section in order to provide a view of its interior.

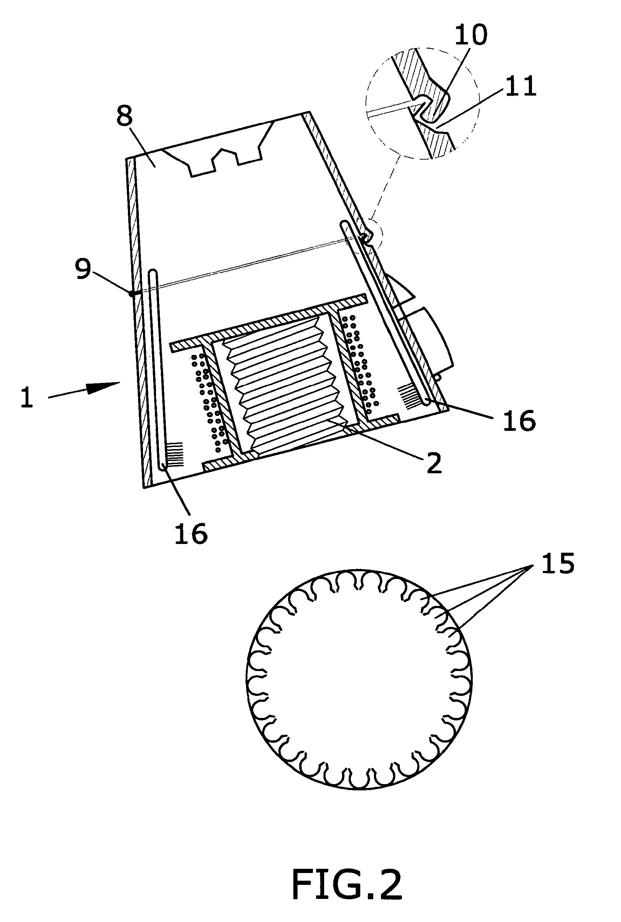

Figure 2 shows a vertical cross section of a screw cap and a ground view of the lower part of the cap, showing in the arrangement the placement of a series of interdental brushes.

### PREFERRED EMBODIMENT OF THE INVENTION

In the light of the figures below, a preferred embodiment of the proposed invention is described.

Figure 1 shows the screw cap (1) which is provided on its interior base a threaded interior (2) on which the threaded neck (12) of a tube or bottle (13) is threaded.

In the interior space of the cap between its lateral walls and the threaded interior (2), a cylindrical spool (3) is arranged on which a reel (5) of dental floss (4) is arranged.

The dental floss (4) of the reel (5) is supplied through a window (6) or aperture which is made on an inspection hatch (7) which may be articulated in its interior edge at an articulation point (14) for the purpose of inspecting the interior of the part of the cap which houses the reel (3) of dental floss.

The cap (1) is also provided with an upper part (8) which permits the upper part of the cap to be inspected. Said upper part is articulated in respect of the lower part which houses a reel (3) of dental floss (4) at an articulation point (9) being provided with means of closure between the upper part of the cap and the lower part so that the upper part is provided on part of its lower edge with a closing tab or tongue (10) which fits in a groove (11) arranged facing the upper edge of the lower part of the cap.

Figure 2 shows an embodiment in which it may be seen how on the lower part of the cap and in its interior face, a series of clips (15) are arranged on its walls or equivalent means of attachment, for affixing interdental brushes (16) on the interior face of the lower part of the cap, describing therefore a circumference, leaving the interior space of the cap free, which permits the thread and the reel of dental floss to be housed therein.

The height of the lower part of the cap and the interdental brushes (16) shall be such that on one hand it permits a correct use of the same, as well as permitting them to remain housed inside the cap, and to be contained without any specific difficulty.

Due to the means described, on one hand it is possible to combine the functions of closure of a tube or bottle and also the storage and dispensation of dental floss, in addition to the possibility of interior inspection through the inspection hatch and the possibility of replacing the dental floss reel with another when it has finished.

The essential nature of this invention is not altered by any variations in materials, form, size and arrangement of its component elements, which are described in a non-restrictive manner, with this being sufficient to proceed to its reproduction by an expert.

## Claims

1. Screw cap with a dental floss deposit which is provided with an aperture (2) in its lower base which is internally threaded wherein between the lateral walls of the cap and the interior threaded aperture a spool (3) is housed on which a reel (5) of dental floss (4) is arranged, being supplied through a dispensing window (6) and provided with means of internal inspection, **characterized in that** on the interior face of the lower part of the cap there is a series of clips (15) or there are other equivalent attachment means on said interior face in order to fit and affix interdental brushes (16).

2. Screw cap with a dental floss deposit according to claim one **characterised in that** one of the means of internal inspection is an inspection hatch (7) in which the dispensing window (6) is arranged which is provided with cutting means.

3. Screw cap with dental floss deposit according to claim 2, **characterised in that** the inspection hatch (7) is provided with an articulated edge (14) which permits internal inspection of the cap (1).

4. Screw cap with dental floss deposit according to claim one **characterised in that** another means of inspection consists of the fact that the upper part (8) of the cap is articulated in respect of the lower part.

5. Screw cap with dental floss deposit according to claim 4 **characterised in that** the upper part of the cap is articulated in respect of the lower part by means of an articulation point (9) provided, in addition, with means of engagement of the upper part of the cap in respect of the lower part consistent with a tongue or tab (10) which fits in a groove (11) made on the upper edge of the lower part of the cap and arranged in a manner such that it faces the tongue or tab (10).

## Patentansprüche

1. Schraubkappe mit Zahnseidendepot, die in ihrem unteren Bereich mit einer Öffnung versehen ist (2) und über ein Innengewinde verfügt, wobei zwischen den Seitenwänden der Kappe und dem Innern der Öffnung mit Gewinde eine Spule (3) untergebracht ist, auf der eine Rolle (5) Zahnseide (4) angeordnet ist, die über ein Abgabefenster (6) bereit gestellt wird, und mit Mitteln zur internen Inspektion ausgestattet ist, **dadurch gekennzeichnet, dass** es an der Innenseite des unteren Teils der Kappe eine Reihe von Clips (15) gibt, oder an dieser Innenfläche sind äquivalente Befestigungsmittel angebracht, um Interdentalbürstchen (16) anzubringen und zu befestigen.

2. Schraubkappe mit Zahnseidendepot nach Anspruch 1, **dadurch gekennzeichnet, dass** eines der Mittel zur internen Inspektion eine Inspektionsklappe (7) ist, an der das Abgabefenster (6) angebracht ist, welche mit Schneidmitteln ausgestattet ist.

3. Schraubkappe mit Zahnseidendepot nach Anspruch 2, **dadurch gekennzeichnet, dass** die Inspektionsklappe (7) mit einer Gelenkecke (14) ausgestattet ist, die die interne Inspektion der Kappe (1) gestattet.

4. Schraubkappe mit Zahnseidendepot nach Anspruch 1, **dadurch gekennzeichnet, dass** das andere Inspektionsmittel aus dem Umstand besteht, dass das obere Teil (8) der Kappe über ein Gelenk mit dem unteren Teil verbunden ist.

5. Schraubkappe mit Zahnseidendepot nach Anspruch 4, **dadurch gekennzeichnet, dass** der obere Teil der Kappe mit dem unteren Teil über eine Gelenkstelle (9) verbunden ist, die zusätzlich mit Befestigungsmitteln des oberen Teils der Kappe in Bezug auf den unteren Teil vorgesehen ist, ausgestattet mit einer Zunge oder Lasche (10), die in eine Rille (11) passt, die aus der oberen Ecke des unteren Teils der Kappe gemacht und in der Weise angebracht ist, dass sie der Zunge oder Lasche (10) gegenüber liegt.

## Revendications

1. Bouchon à vis avec un dépôt de soie dentaire qui est pourvu d'une ouverture (2) dans sa base inférieure qui est filetée intérieurement dans lequel entre les parois latérales du bouchon et l'ouverture filetée intérieurement, une bobine (3) est logée sur laquelle une bobine (5) de soie dentaire (4) est disposée, étant alimentée à travers une fenêtre de distribution (6) et munie de moyens de contrôle interne, **caractérisée en ce que** sur la face intérieure de la partie inférieure du bouchon se trouve une série de clips (15) ou se trouvent d'autres moyens d'attache équivalents sur ladite face intérieure afin d'adapter et d'apposer des brosses interdentaires (16).

2. Bouchon à vis avec un dépôt de soie dentaire selon la revendication une, **caractérisé en ce que** l'un des moyens de contrôle interne est une trappe de visite (7) dans laquelle la fenêtre de distribution (6) est disposée, qui est munie de moyens de coupe.

3. Bouchon à vis avec dépôt de soie dentaire selon la revendication 2, **caractérisé en ce que** la trappe de visite (7) est pourvue d'un bord articulé (14) qui permet une inspection interne du bouchon (1).

4. Bouchon à vis avec dépôt de soie dentaire selon la revendication une, **caractérisé en ce qu'**un autre moyen de contrôle comprend le fait que la partie supérieure (8) du bouchon est articulée relativement à la partie inférieure.

5. Bouchon à vis avec dépôt de soie dentaire selon la revendication 4, **caractérisé en ce que** la partie supérieure du bouchon est articulée relativement à la partie inférieure par l'intermédiaire d'un point d'articulation (9) équipé, en outre, de moyens d'engagement de la partie supérieure du bouchon relativement à la partie inférieure compatible avec la languette ou patte (10) qui s'ajuste dans une rainure (11 ) réalisée sur le bord supérieur de la partie inférieure du bouchon et agencée de telle manière qu'elle soit tournée vers la languette ou patte (10).
